Europäisches Patentamt

European Patent Office

Office européen des brevets

(19)

(11) Numéro de publication : **0 652 259 A1**

(12)

# DEMANDE DE BREVET EUROPEEN

(21) Numéro de dépôt : **94402549.3**

(22) Date de dépôt : **10.11.94**

(51) Int. Cl.⁶ : **C08L 95/00**

(30) Priorité : **10.11.93 FR 9313458**

(43) Date de publication de la demande :
**10.05.95 Bulletin 95/19**

(84) Etats contractants désignés :
**AT BE CH DE DK ES FR GB IE IT LI LU MC NL SE**

(71) Demandeur : **COLAS S.A.**
**7 Place René Clair**
**F-92653 Boulogne-Billancourt Cédex (FR)**

(72) Inventeur : **Durand, Graziella**
**44bis, rue de l'Abbé Glatz**
**F-92270 Bois-Colombes (FR)**
Inventeur : **Chappat, Michel**
**6, Square du Laonnais**
**F-78310 Maurepas (FR)**
Inventeur : **Poirier, Jean-Eric**
**11, Place du 8 mai 1945**
**F-78114 Cressely (FR)**

(74) Mandataire : **Phélip, Bruno et al**
**c/o Cabinet Harlé & Phélip**
**21, rue de La Rochefoucauld**
**F-75009 Paris (FR)**

(54) **Emulsion de bitume gélifiée pour répandage.**

㉗    La présente invention concerne une émulsion de bitume pour répandage comportant une phase aqueuse continue, une dispersion de bitume, un agent émulsifiant, apte à être transformée par rupture, de manière à produire un liant routier.
    Selon l'invention, elle comprend un agent gélifiant et elle présente un seuil d'écoulement.
    Cette émulsion est à la fois simple à répandre et stable après répandage.

EP 0 652 259 A1

La présente invention concerne les émulsions de bitume utilisables comme liants routiers pour répandage.

Les émulsions de bitume sont des dispersions de bitume dans une phase aqueuse continue. La formation de l'émulsion est permise par un agent tensioactif ou émulsifiant, et réalisée par l'emploi d'une énergie mécanique de cisaillement du liant.

Pour les émulsions, de nombreuses compositions de la phase aqueuse, comme du bitume, ou de la phase hydrocarbonée dispersée, ont été proposées et sont utilisées en fonction des propriétés recherchées.

On définit ainsi les conditions dans lesquelles se produit la rupture de l'émulsion et les propriétés du liant en résultant (adhésivité, cohésivité,...), la viscosité, la stabilité au stockage, les conditions de prise et de mûrissement....

En particulier, la viscosité a fait l'objet de nombreuses études. La viscosité de l'émulsion résulte essentiellement de la concentration de la phase dispersée (le bitume dans la phase aqueuse), mais elle est également influencée par la nature même de la phase dispersée, de la phase aqueuse, en particulier du type et de la concentration de l'agent émulsifiant utilisé. Par ailleurs, il est connu que la présence de sels (tels que le chlorure de sodium ou de calcium) dans le bitume agit sur sa viscosité.

Entre autres contraintes, le concepteur d'une émulsion de bitume pour répandage cherche à réaliser une émulsion à faible viscosité pour faciliter sa manipulation et sa circulation dans les différentes machines jusqu'au répandage, mais ayant une viscosité suffisante pour améliorer sa stabilité au stockage et éviter son écoulement lors du répandage avant sa rupture.

On comprend qu'une émulsion de viscosité élevée sera difficile à répandre.

Au contraire, une émulsion à très faible viscosité n'adhèrera pas ou ne restera pas fixée sur la route sur laquelle elle sera déposée.

Jusqu'à présent, ces propriétés des émulsions étaient considérées comme contradictoires et le choix de l'épaississant était destiné à la recherche d'un compromis répondant moyennement à chacune des contraintes contradictoires exposées plus haut.

Par ailleurs, les émulsions bitumineuses utilisées jusqu'à maintenant ne peuvent être stockées au-delà d'une quinzaine de jours sans perdre leurs propriétés nécessaires à l'obtention d'un bon répandage. On constate alors notamment des phénomènes de décantation des émulsions leur faisant perdre leur homogénéité.

L'invention vise à résoudre ces difficultés et à proposer une émulsion répondant convenablement aux propriétés considérées jusqu'à présent comme contradictoires et pouvant être stockée avant utilisation pendant une longue durée, pendant plus d'un mois par exemple.

L'invention concerne donc une émulsion de bitume de répandage comportant une phase aqueuse continue, une dispersion de bitume, un agent émulsifiant, apte à être transformée par rupture, de manière à produire un liant routier.

Selon l'invention, elle comprend un agent gélifiant et elle présente un seuil d'écoulement.

Ce comportement de gel est caractérisé en ce que lorsque l'émulsion est soumise à une contrainte ou seuil d'écoulement dont la valeur est inférieure à une valeur limite, cette émulsion se comporte comme un solide. Au contraire, lorsqu'elle est soumise à un taux de cisaillement engendrant une contrainte ou seuil d'écoulement supérieur à cette même valeur limite, elle s'écoule et se comporte donc comme un liquide.

Ainsi, cette émulsion peut être utilisée dans toutes les machines et les dispositifs utilisés pour l'épandage. Elle peut, en particulier, être véhiculée par des pompes.

Après répandage, cette émulsion ne s'écoule pas, même en présence d'une forte déclivité, tant que la contrainte engendrée par celle-ci est faible par rapport à la valeur limite mentionnée plus haut.

De même, l'émulsion ne s'écoule pas lorsqu'elle est exposée, après répandage, à la pluie. Ceci facilite son utilisation sous des conditions météorologiques instables.

En effet, l'émulsion de l'invention, après cisaillement et fluidification lors du répandage, reprend très vite sa consistance de "solide" au repos (la thixotropie de ce type d'émulsion est faible).

On considérait jusqu'à présent que compte tenu des conditions dans lesquelles les émulsions sont fabriquées, stockées et utilisées, seul un nombre limité d'additifs tels que ceux augmentant la viscosité de l'émulsion, pouvait être utilisé.

Au contraire, il est apparu que ce comportement de gel, loin de constituer une difficulté insurmontable, procure des effets avantageux mentionnés plus haut ne gênant pas la mise en oeuvre des appareils et dispositifs couramment utilisés et en facilitant au contraire l'utilisation.

La formulation de l'émulsion permet de contrôler le niveau du seuil d'écoulement et, de manière préférée, de l'ajuster de telle sorte que le seuil d'écoulement soit supérieur à 0,1 N/m$^2$, ou mieux à 1 N/m$^2$.

Les agents gélifiants utilisés à cet effet ne soulèvent pas de problèmes de compatibilité particuliers et peuvent être mis en oeuvre avec la plupart des émulsions utilisées dans le domaine routier, en particulier avec des émulsifiants aussi bien cationiques qu'anioniques ou non ioniques. Toutefois, il est souhaitable d'éviter l'association de gélifiant et d'émulsifiant de charges opposées. Un agent gélifiant chargé est donc associé à un émulsifiant neutre ou de même charge. Un agent gélifiant neutre peut être utilisé avec un émulsifiant de charge quelconque.

Chacun de ces émulsifiants donne à l'émulsion résultante les propriétés habituelles que l'on peut en attendre, et permet un stockage de l'émulsion avant utilisation, pendant plus d'un mois.

L'agent gélifiant peut être choisi, soit parmi les polymères naturels de la famille des polysaccharides (gomme xanthane, galactomanane, gomme scléroglucane...) et les polymères cellulosiques (hydroxyéthyl cellulose...), soit parmi les polymères de synthèse hydrosolubles (dérivés du polyacrylamide, polymère à fonctionnalité polyuréthane...), parmi les tensioactifs amphotères (alkylbétaine, alkylamidobétaine...) ou parmi les tensioactifs polymériques. Leur mode d'action consiste soit en un épaississement de la phase continue, soit en la création d'un réseau continu par formation de liaisons avec les particules de bitume.

La concentration de ces agents gélifiants variant selon leur nature sera généralement comprise entre 0,25 à 5 g/l d'émulsion, et le plus souvent entre 0,5 à 2 g/l.

Le procédé de fabrication de ces émulsions comporte les étapes traditionnelles de préparation de la phase aqueuse et de mélange de cette phase avec le bitume dans un moulin colloïdal. Deux procédés de fabrication donnent de bons résultats.

Dans le premier de ces procédés de fabrication, l'agent gélifiant est ajouté aux autres composants lors de la préparation de la phase aqueuse.

Selon le deuxième mode de préparation, l'agent gélifiant est ajouté dans l'émulsion après fabrication.

Les exemples suivants présentent différentes réalisations des émulsions de l'invention et de leur procédé de réalisation.

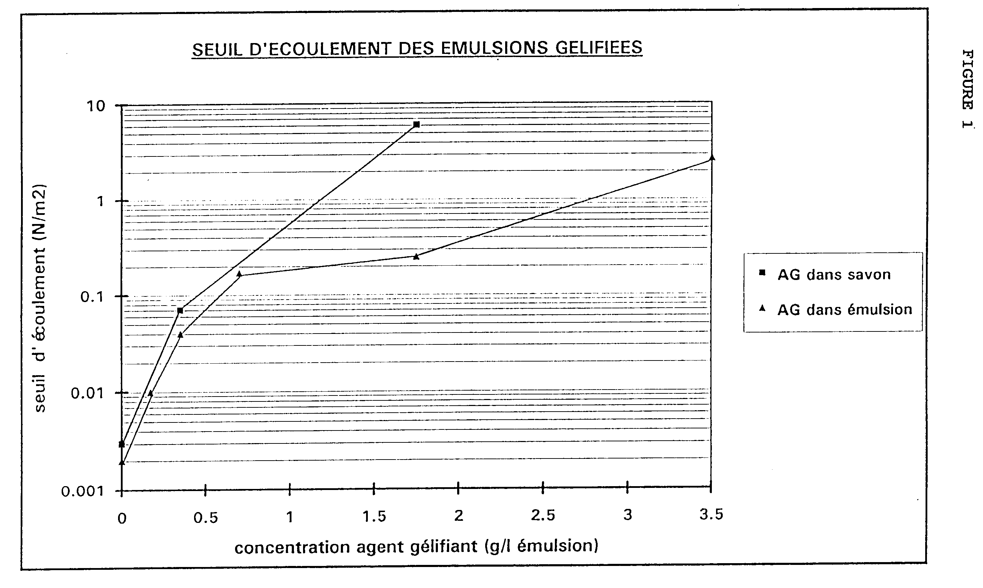

On a porté sur la Figure 1 l'évolution type du seuil d'écoulement en fonction de la teneur en agent gélifiant et selon le mode de préparation.

## EXEMPLE A

Une émulsion cationique de répandage est préparée à partir d'un bitume 180/220 et contient 65 % de bitume.

La phase aqueuse est réalisée par dispersion dans de l'eau industrielle d'un émulsifiant qui est du propylènediamine de suif (distribué sous la dénomination commerciale DINORAM S par la Société CECA). Sa concentration est de 2 g/l d'émulsion.

De manière à amener le pH de cette phase aqueuse à une valeur comprise entre 2 et 2,5, on y ajoute de l'acide chlorhydrique à 20°B.

Après la préparation de cette phase aqueuse, elle est mélangée au bitume dans un homogénéiseur du type moulin colloïdal dans lequel on introduit 350 parties de la phase aqueuse à 40°C et 650 parties de bitume à 130°C.

Un agent gélifiant, polymère hydrosoluble de type associatif (NOPCO DSX 1550 de SIDOBRE-SINNOVA) est ajouté à raison de 1,75 g/l d'émulsion. Le mélange est alors agité pendant 15 à 30 mn.

## EXEMPLE B

Comme dans l'exemple A, une émulsion de répandage est préparée à partir d'un bitume 180/220 et contient 65 % de bitume.

La phase aqueuse est réalisée par dispersion dans de l'eau industrielle d'un émulsifiant qui est du propylènediamine de suif (distribué sous la dénomination commerciale DINORAM S par la Société CECA). Sa concentration est de 2 g/l d'émulsion.

De manière à amener le pH de cette phase aqueuse à une valeur comprise entre 2 et 2,5, on y ajoute de l'acide chlorhydrique à 20°B.

On ajoute alors le même agent gélifiant que dans l'exemple A, de telle façon que sa concentration au sein de l'émulsion finale soit également de 1,75 g/l. La phase aqueuse ainsi obtenue est agitée pendant environ 10 mn.

Elle est alors mélangée au bitume dans un homogénéiseur du type moulin colloïdal, dans lequel on introduit 350 parties de phase aqueuse à 40°C et 650 parties de bitume à 130°C.

Les propriétés de ces émulsions (exemples A, B) sont comparées à celles de l'émulsion de référence 1 fabriquée dans des conditions comparables (cf. tableau N° 1).

Cette émulsion de référence 1 est une émulsion cationique préparée à partir d'un bitume classique 180/220 et contenant 65 % de bitume.

La phase aqueuse est réalisée par dispersion dans de l'eau industrielle d'un émulsifiant qui est du propylènediamine de suif (distribué sous la dénomination commerciale DINORAM S par la Société CECA). Sa concentration est de 2 g/l.

De manière à amener le pH de cette phase aqueuse à une valeur comprise entre 2 et 2,5, on y ajoute de l'acide chlorhydrique à 20°B.

Cette phase aqueuse est alors mélangée au bitume dans un homogénéiseur du type moulin colloïdal, dans lequel on introduit 350 parties de phase aqueuse à 40°C et 650 parties de bitume à 130°C.

Le tableau N° 1 met en évidence :
- une meilleure efficacité à combattre les coulures pour émulsions A et B en relation avec la présence d'un seuil d'écoulement ;
- l'influence du mode de fabrication (il vaut mieux ajouter l'agent gélifiant dans la phase savon) ;
- les autres caractéristiques et propriétés de l'émulsion sont similaires à celles de l'émulsion de référence.

EXEMPLE C

On réalise une émulsion cationique de répandage à partir d'un bitume 180/220 qui contient 69 % de bitume.

La phase aqueuse est réalisée par dispersion dans de l'eau industrielle d'un émulsifiant amphotère à raison de 1,2 g de matière active par litre d'émulsion. Cet émulsifiant est distribué sous la marque AMPHOSOL DM par la Société STEPAN.

Après adjonction d'acide chlorhydrique, cette phase aqueuse est mélangée au bitume dans un homogénéiseur du type moulin colloïdal, dans lequel on introduit 310 parties de phase aqueuse à 40°C et 610 parties de bitume à 130°C.

Les propriétés de cette émulsion (exemple C) sont comparées à celles de l'émulsion de référence 2 fabriquée dans des conditions comparables (cf. tableau N° 2).

L'émulsion cationique de répandage de référence 2 est préparée à partir d'un bitume 180/220 et contient 69 % de bitume.

Elle est réalisée dans les mêmes conditions que l'émulsion de référence 1, à ceci près que lors du mélange dans l'homogénéiseur du type moulin colloïdal, on introduit 310 parties de phase aqueuse et 690 parties de bitume.

Le tableau N° 2 met en évidence que la meilleure efficacité de l'émulsion C à combattre les coulures est reliée à l'existence d'un seuil d'écoulement. Les autres caractéristiques et propriétés de l'émulsion C sont identiques à celles de l'émulsion de référence.

Les propriétés comparées apparaissent dans les tableaux 1 et 2 suivants.

**TABLEAU N° 1**

| CARACTERISTIQUES | EMULSION DE REFERENCE 1 | EMULSION A | EMULSION B |
|---|---|---|---|
| % eau            (NF T 66023) | 34,8 | 34,7 | 35 |
| % refus 630 $\mu$m (NF T 66016) | 0,01 | 0 | 0 |
| % refus 160 $\mu$m (NF T 66016) | 0 | 0 | 0 |
| IREC            (NF T 66017) | 120 | 125 | 115 |
| SMS 210            (méth. SHELL) | 4,3 | 8,9 | 5 |
| Diamètre médian ($\mu$m) | 3,6 | 4,2 | / |
| Adhésivité            (NF T 66018) | 100 | 100 | 100 |
| Seuil d'écoulement (N/m$^2$) $\tau$ | 0 | 0,2 | 6 |
| Visco à 20°C et 1s-1 (Pa.s) | 0,2 | 2,4 | 19 |
| Coulures à l'application | oui | peu | néant |

## TABLEAU N° 2

| CARACTERISTIQUES | | EMULSION DE REFERENCE 2 | EMULSION C |
|---|---|---|---|
| % eau | (NF T 66023) | 31,1 | 29,3 |
| % refus 630 μm | (NF T 66016) | 0,1 | * |
| % refus 160 μm | (NF T 66016) | 0,1 | 0,2 |
| Viscosité STV en s | (NF T 66020) | 73 | 491 |
| IREC | (NF T 66017) | 90 | 95 |
| SMS 210 | (méth. SHELL) | 4 | 10 |
| Seuil d'écoulement (N/m²) $\tau$ | | O | 1,3 |
| Coulures à l'application | | oui | néant |

* mesure rendue difficile à cause de la viscosité élevée

Dans ces tableaux, les lettres NF représentent les normes françaises auxquelles il convient de se reporter pour la définition complète du principe de mesure retenu pour chacune des grandeurs faisant référence à une telle norme.

Indiquons toutefois que :

- Le pourcentage en eau est défini selon la norme NF T 66023 de la manière suivante : l'eau contenue dans la prise d'essai est entraînée par distillation à refus d'un solvant non miscible à l'eau. Ce solvant est du Toluène pur. Après condensation, l'eau se sépare du solvant et s'accumule dans un tube de recette gradué de forme convenable. Le liquide d'entraînement retourne dans le récipient de distillation.

La teneur en eau de l'échantillon en pourcentage, en masse est exprimée selon la formule suivante :

$$\% \text{ d'eau} = \frac{\text{volume d'eau en mm dans le tube de recette x 100}}{\text{masse en g de la prise d'essai}}$$

- Les pourcentages de refus, respectivement à 630 μm et à 160 μm, permettent la quantification de la quantité de grosses particules de liant dans l'émulsion à examiner.

A cet effet, on fait passer une certaine masse d'émulsion à travers deux tamis d'ouvertures de mailles, respectivement 630 μm et 160 μm et, après lavage et séchage, on pèse la quantité de liant retenue sur chacun de ces tamis. Les résultats sont exprimés en pourcentage de masse par rapport à l'émulsion initiales.

- L'IREC a pour objet l'évaluation de la rupture d'une émulsion cationique vis-à-vis de fines minérales de référence.

A cet effet, on introduit régulièrement la quantité de fines de référence qui provoque la rupture de 100 g d'émulsion. L'indice de rupture de l'émulsion indiquée est alors donné par la formule :

$$\text{IREC} = \frac{m \times 100}{E}$$

où E est la masse d'émulsion, et m est la masse de fines de référence introduites.

- SMS 210 (méthode SHELL) : ce test est considéré comme une évaluation de la rupture chimique à l'interface émulsion/granulat.

Il consiste à mélanger des quantités connues de granulat (sable de Corbigny) et d'émulsion et à mesurer la quantité d'émulsion restant à la surface des granulats après lavage. Plus cette valeur est élevée, meilleure est la rupture.

- L'adhésivité est définie vis-à-vis d'un granulat de référence en présence d'eau.

Cette adhésivité s'exprime par une note correspondant au pourcentage de surface du granulat recouverte d'un film de bitume. Si le granulat est entièrement recouvert de bitume, l'adhésivité est égale à 100. Si le bitume est séparé du granulat, elle est égale à 0.

Pour la mesurer, on malaxe un mélange d'émulsion et de granulats type. Après rupture complète de l'émulsion dans des conditions déterminées, le mélange est immergé dans de l'eau placée dans un récipient en verre. Au bout d'un temps donné et dans des conditions déterminées, on évalue d'une manière visuelle le pourcentage de surface recouverte de liant.

- Les seuils d'écoulement ont été mesurés à l'aide d'un appareil commercialisé sous la dénomination CARRIMED CSL 100 (RHEO).

Ces mesures sont réalisées en mode écoulement entre des cylindres coaxiaux à une température de 20°C. Le balayage de la contrainte est linéaire selon les trois régimes suivants :
  - montée de 0 à 5 N/m$^2$ en 5 mn,
  - palier à 5 N/m$^2$ pendant 1 mn,
  - descente de 5 à 0 N/m$^2$ en 5 mn.

Les courbes d'écoulement sont modélisées à partir de la courbe "montée" par l'équation de Casson selon la formule suivante :

$$\tau = (A^{\frac{1}{2}} + (B \times \frac{d\,\gamma}{d\,t})^{\frac{1}{2}})^2$$

dans laquelle :

$\tau$ est la contrainte (exprimée en N/m$^2$),

$\frac{d\,\gamma}{d\,t}$ est le gradient de cisaillement (s$^{-1}$),

A est le seuil d'écoulement (en N/m$^2$),

B est le coefficient de viscosité (en Pa.s).

- Les coulures sont qualitativement appréciées par observation visuelle.

## Revendications

1. Emulsion de bitume pour répandage comportant une phase aqueuse continue, une dispersion de bitume, un agent émulsifiant, apte à être transformée par rupture, de manière à produire un liant routier,
   caractérisée en ce qu'elle comprend un agent gélifiant et en ce qu'elle présente un seuil d'écoulement.

2. Emulsion de bitume selon la revendication 1, caractérisée en ce que la concentration de l'agent gélifiant est déterminée, de telle sorte que l'émulsion de bitume ait un seuil d'écoulement supérieur à 0,1 N/m$^2$.

3. Emulsion de bitume selon la revendication 2, caractérisée en ce que la concentration de l'agent gélifiant est déterminée, de telle sorte que l'émulsion de bitume ait un seuil d'écoulement supérieur à 1 N/m$^2$.

4. Emulsion de bitume selon l'une quelconque des revendications 1 à 3, caractérisée en ce que l'agent gélifiant est composé de polymères naturels de la famille des polysaccharides.

5. Emulsion de bitume selon l'une quelconque des revendications 1 à 3, caractérisée en ce que l'agent gélifiant est composé de polymères de synthèse hydrosolubles.

6. Emulsion de bitume selon l'une quelconque des revendications 1 à 3, caractérisée en ce que l'agent gélifiant est composé de tensioactifs amphotères.

7. Emulsion de bitume selon l'une quelconque des revendications 1 à 3, caractérisée en ce que l'agent gélifiant est composé de tensioactifs polymériques.

8. Procédé de fabrication d'une émulsion de bitume conforme à l'une quelconque des revendications 1 à 7, caractérisé en ce que :

on prépare la phase aqueuse par mélange d'eau, d'agent émulsifiant et d'agent gélifiant,
on mélange la phase aqueuse ainsi préparée au bitume dans un moulin colloïdal.

9. Procédé de fabrication d'une émulsion de bitume conforme à l'une quelconque des revendications 1 à 7, caractérisé en ce que :
on prépare la phase aqueuse par mélange d'eau et d'agent émulsifiant,
on mélange la phase aqueuse ainsi préparée dans un moulin colloïdal,
et pendant ce mélange, on incorpore l'agent gélifiant.

10. Procédé de fabrication d'une émulsion de bitume conforme à l'une quelconque des revendications 1 à 7, caractérisé en ce que l'agent gélifiant est incorporé après la fabrication de l'émulsion.

FIGURE 1

SEUIL D'ECOULEMENT DES EMULSIONS GELIFIEES

- ■ AG dans savon
- ▲ AG dans émulsion

concentration agent gélifiant (g/l émulsion)

seuil d'écoulement (N/m2)

**Office européen
des brevets**

# RAPPORT DE RECHERCHE EUROPEENNE

Numero de la demande

EP 94 40 2549

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 173 490 (POLYSAR) <br> * revendications 1,5 * <br> --- | 1-4,8-10 | C08L95/00 |
| X | US-A-4 822 427 (GRAF ET AL) <br> * revendication 2 * <br> --- | 1-4,8-10 | |
| X | US-A-4 018 730 (MCDONALD) <br> * revendications 1,4 * <br> --- | 1-4,8-10 | |
| X | EP-A-0 425 380 (ELF FRANCE) <br> * revendications 1,2 * <br> --- | 1-4,8-10 | |
| X | EP-A-0 534 039 (NYNÄS) <br><br> * page 2; revendication 1 * <br> --- | 1-3,5, 8-10 | |
| X | FR-A-2 194 910 (SHELL) <br> * revendication 10 * <br> --- | 1-4,7-10 | |
| X | DE-A-39 42 582 (RÜTGERSWERKE) <br> * revendications 1,3 * <br> --- | 1-4,8-10 | **DOMAINES TECHNIQUES RECHERCHES (Int.Cl.6)** |
| X | File supplier PAJ/JPO & JP-A_2166164 (Ichiro Fukai) 26/6 90  *abstract* <br> --- | 1-3,5, 8-10 | C08L |
| X | DATABASE WPI <br> Derwent Publications Ltd., London, GB; <br> AN 71-54418S <br> & JP-A-46 029 160 (SANYO PULP) 1900 <br> * abrégé * <br><br> ----- | 1-4,8-10 | |

Le présent rapport a été établi pour toutes les revendications

| Lieu de la recherche | Date d'achèvement de la recherche | Examinateur |
|---|---|---|
| LA HAYE | 13 Février 1995 | Lentz, J |